# EUROPEAN PATENT SPECIFICATION

(11) **EP 4 197 875 B1**
(45) Date of publication and mention of the grant of the patent: **09.04.2025**
(21) Application number: 22211215.3
(22) Date of filing: 02.12.2022
(51) Int. Cl.: B60W 50/08, B60W 10/04

(54) **DRIVING SUPPORTING APPARATUS, DRIVING SUPPORTING METHOD, AND PROGRAM**
FAHRUNTERSTÜTZUNGSVORRICHTUNG, FAHRUNTERSTÜTZUNGSVERFAHREN UND PROGRAMM
APPAREIL DE SUPPORT DE CONDUITE, PROCÉDÉ DE SUPPORT DE CONDUITE ET PROGRAMME

(30) Priority: 17.12.2021 JP 2021204947
(43) Date of publication of application: 21.06.2023
(73) Proprietor: TOYOTA JIDOSHA KABUSHIKI KAISHA, Toyota-shi Aichi 471-8571 (JP)
(72) Inventor: TSUCHIYA, Koichi, TOYOTA-SHI, AICHI, 471-8571 (JP)
(74) Representative: Cabinet Beau de Loménie

(56) References cited:
- US-A1- 2015 307 091
- US-A1- 2021 139 022

## Description

### TECHNICAL FIELD

The present invention relates to a driving supporting apparatus configured to perform an acceleration limiting control to impose a limit on (control) an acceleration of a vehicle (i.e., a host vehicle) in such a manner that the acceleration of the vehicle does not exceed a limiting acceleration, when a driver of the vehicle erroneously operates an acceleration operation element (accelerator); a method for performing the acceleration limiting control when the driver erroneously operates the acceleration operation element; and a program to cause a computer to execute the acceleration limiting control when the driver erroneously operates the acceleration operation element.

### BACKGROUND

There has been a known driving supporting apparatus configured to perform the acceleration limiting control when the driver erroneously operates the acceleration operation element.

For example, US 2015/307091 discloses a vehicle acceleration suppression device and method, and US 2021/139022 discloses delay decision making for autonomous driving vehicles in response to obstacles based on confidence level and distance. Besides, a driving supporting apparatus (hereinafter, referred to as a "conventional apparatus"), disclosed in Japanese Patent Application Laid-Open No. 2014-19295, sets a threshold pattern based on a distance between a vehicle and a rear object that is present behind the vehicle, a road gradient, or the like, when the vehicle starts running. The conventional apparatus determines whether or not the acceleration operation element is erroneously operated, using the threshold pattern, and performs the acceleration limiting control when it is determined that the acceleration operation element is erroneously operated.

When the rear object and the road gradient are present, the conventional apparatus can decrease a possibility that it mistakenly determines that the acceleration operation element is erroneously operated when the acceleration operation element is not actually erroneously operated (i.e, it can reduce a possibility of making a mistaken determination). Therefore, the conventional apparatus can decrease a possibility that it performs the unnecessary acceleration limiting control. However, when the rear object and/or the road gradient are/is not present, the conventional apparatus cannot decrease the possibility of making the mistaken determination, and therefore, it also cannot reduce the possibility that it performs the unnecessary acceleration limiting control.

### SUMMARY

In view of the above, the present inventor has been studying a driving supporting apparatus (hereinafter, referred to as a "developing apparatus") that may be able to reduce the possibility that it performs the unnecessary acceleration limiting control, when the rear object and/or the road gradient are/is not present. The developing apparatus is configured to perform the acceleration limiting control when (it is determined that) the driver erroneously operates the acceleration element in a case where a distance between the vehicle and a front target object that is present in front of the vehicle is equal to or shorter than a predetermined distance threshold.

In general, a driver varies the minimum/shortest distance (i.e., minimum allowable distance) between the vehicle and the front target object depending on a type of the front target object. The driver sets the minimum allowable distance of when the front target object is a vehicle to be a distance shorter than the minimum allowable distance of when the front target object is a pedestrian.

However, since the developing apparatus does not take into consideration the type of the front target object, the developing apparatus cannot sufficiently reduce the possibility that it performs the unnecessary acceleration limiting control.

The present invention is made to cope with the problems described above. That is, one of objectives of the present invention is to provide a driving supporting apparatus that is able to sufficiently reduce the possibility that it performs the unnecessary acceleration limiting control even when the rear object and/or the road gradient are/is not present.

The driving supporting apparatus (hereinafter, referred to as a "present invention apparatus") according to the present invention comprises:
an acceleration operation element operated by a driver of a vehicle to increase a driving force which a driving source of the vehicle generates; and
a control unit capable of performing an acceleration limiting control to control the vehicle in such a manner that an acceleration of the vehicle does not exceed a predetermined limiting acceleration,
wherein, the control unit is configured to:
   set a distance threshold to a value varying depending on a kind of a front target object that is present in front of the vehicle; and
   perform the acceleration limiting control when a distance condition is satisfied and when an erroneous operation condition is satisfied, the distance condition being a condition that is to be satisfied when a distance between the vehicle and the front target object is equal to or shorter than the distance threshold, and the erroneous operation condition being a condition that is to be satisfied when the driver is erroneously operating the acceleration operation element.

According to the present invention apparatus, the acceleration limiting control is performed, when the "distance condition that is to be satisfied when the distance between the vehicle and the front target object is equal to or shorter than the distance threshold" is satisfied, and when the erroneous operation condition is satisfied. Therefore, the possibility that the unnecessary acceleration limiting control is performed can be decreased, even when the rear object and/or the road gradient are/is not present. In addition, according to the present invention apparatus, the distance threshold is set to the value that varies depending on the kind of the front target object. In other words, the distance threshold is set to the value that corresponds to the minimum allowable distance varying depending on the kind of the front target object. Therefore, the possibility that the unnecessary erroneous operation corresponding control is performed can be sufficiently decreased, even when the rear object and/or the road gradient are/is not present.

In some embodiments, the control unit is configured to set, when the kind of the front target object is a vehicle, the distance threshold to a value that is smaller than a value of the distance threshold that is set when the kind of the front target object is a pedestrian.

When the kind of the front target object is a vehicle, the driver of the host vehicle attempts to overtake or pass the front target object, and therefore, the minimum allowable distance tends to be shorter than that of when the kind of the front target object is a pedestrian. According to the above embodiment, since the distance threshold is set to a value that corresponds to the minimum allowable distance varying depending on the kind of the front target object, the possibility that the unnecessary erroneous operation corresponding control is performed can be further decreased.

In some embodiments, the control unit is configured to determine that the erroneous operation condition is satisfied in a period
from a time point at which at least one of
   a condition that is to be satisfied when an operation amount of the acceleration operation element is equal to or greater than a predetermined operation amount threshold and
   a condition that is to be satisfied when a change rate of the operation amount of the acceleration operation element is equal to or greater than a predetermined operation amount change rate threshold,
becomes satisfied
to a time point at which a predetermined return condition that is to be satisfied when the driver ends a state in which the driver is erroneously operating the acceleration operation element
becomes satisfied.

When the driver erroneously operates the acceleration operation element, it is likely that the operation amount of the acceleration operation element becomes equal to or greater than the operation amount threshold, and it is also likely that the change rate of the operation amount of the acceleration operation element becomes equal to or greater than the operation amount change rate threshold. According to the above embodiment, a possibility that it is determined that the erroneous operation condition is satisfied when the driver is actually erroneously operating the acceleration operation element can be increased.

In some embodiment, the control unit is configured to perform the acceleration limiting control, when the distance condition and the erroneous operation condition are satisfied, in a case in which a vehicle speed indicative of a speed of the vehicle is equal to or lower than a predetermined speed threshold.

An apparatus may be possible to be configured to perform the acceleration limiting control when a time to collision that is a time necessary/required for the vehicle to collide with the front target object becomes equal to or shorter than a start time threshold. However, when the vehicle speed is relatively low, the time to collision tends to be long, and thus, a possibility that a necessary acceleration limiting control is performed may be reduced. Whereas, according to the above embodiment, whether to perform the acceleration limiting control is determined based on the distance to the front target object when the vehicle speed is relatively low. Therefore, the possibility that the necessary acceleration limiting control is performed can be increased.

In some embodiment, the control unit is configured to vary the distance threshold in such a manner that the distance threshold is greater as a relative speed of the front target object with respect to the vehicle is higher.

The above described time to collision is shorter, as the relative speed is higher. In view of this, in the above embodiment, the distance threshold is made greater, as the relative speed is higher. Therefore, the acceleration limiting control can be started at an earlier timing as the relative speed is higher.

In some embodiment, the control unit is configured to:
when there are a plurality of the front target objects, sequentially set the distance threshold to the value determined based on the kind of the front target object that is selected from among the front target objects in ascending order with respect to the distance to the vehicle, and determine whether or not the distance of the target object that is selected in the ascending order is equal to or shorter than the set distance threshold; and
determine that the distance condition is satisfied when there is any front target object whose distance is equal to or shorter than the set distance threshold.

According to the above embodiment, the above described determination can be made from the front target object whose distance is more likely to be equal to or shorter than the distance threshold, and thus, processing load of the present disclosure apparatus can be decreased.

A driving supporting method according to the present invention is a method for performing an acceleration limiting control to limit an acceleration of a vehicle in such a manner that the acceleration of the vehicle does not exceed a predetermined limiting acceleration comprises:
a first step of setting a distance threshold to a value varying depending on a kind of a front target object that is present in front of the vehicle; and
a second step of performing the acceleration limiting control when a distance condition is satisfied and when an erroneous operation condition is satisfied, the distance condition being a condition that is to be satisfied when a distance between the vehicle and the front target object is equal to or shorter than the distance threshold, and the erroneous operation condition being a condition that is to be satisfied when a driver of the vehicle is erroneously operating an acceleration operation element that is to be operated in order to increase a driving force which a driving source of the vehicle generates.

A program storage device according to the present invention is a device, readable by machine, storing a program for performing an acceleration limiting control to limit an acceleration of a vehicle in such a manner that the acceleration of the vehicle does not exceed a predetermined limiting acceleration.

The program causes a computer (processor) to implement processes of:
a first step of setting a distance threshold to a value varying depending on a kind of a front target object that is present in front of the vehicle; and
a second step of performing the acceleration limiting control when a distance condition is satisfied and when an erroneous operation condition is satisfied, the distance condition being a condition that is to be satisfied when a distance between the vehicle and the front target object is equal to or shorter than the distance threshold, and the erroneous operation condition being a condition that is to be satisfied when a driver of the vehicle is erroneously operating an acceleration operation element that is to be operated in order to increase a driving force which a driving source of the vehicle generates.

By the driving supporting method according to the present invention, and the program storage device according to the present invention, the distance threshold is set to the value that varies depending on the kind of the front target object. In other words, the distance threshold is set to the value that corresponds to the minimum allowable distance varying depending on the kind of the front target object. Therefore, the possibility that the unnecessary erroneous operation corresponding control is performed can be sufficiently decreased, even when the rear object and/or the road gradient are/is not present.

Notably, in the above description, in order to facilitate understanding of the present invention, the constituent elements or the like corresponding to those of the embodiments which will be described later are accompanied by parenthesized names and/or symbols which are used in the embodiments. However, the constituent elements should not be limited to those in the embodiments defined by the names and/or the symbols. Other objects, other features, and attendant advantages of the present invention will be readily appreciated from the following description of the embodiment which is made with reference to the accompanying drawings.

### BRIEF DESCRIPTION OF THE DRAWINGS

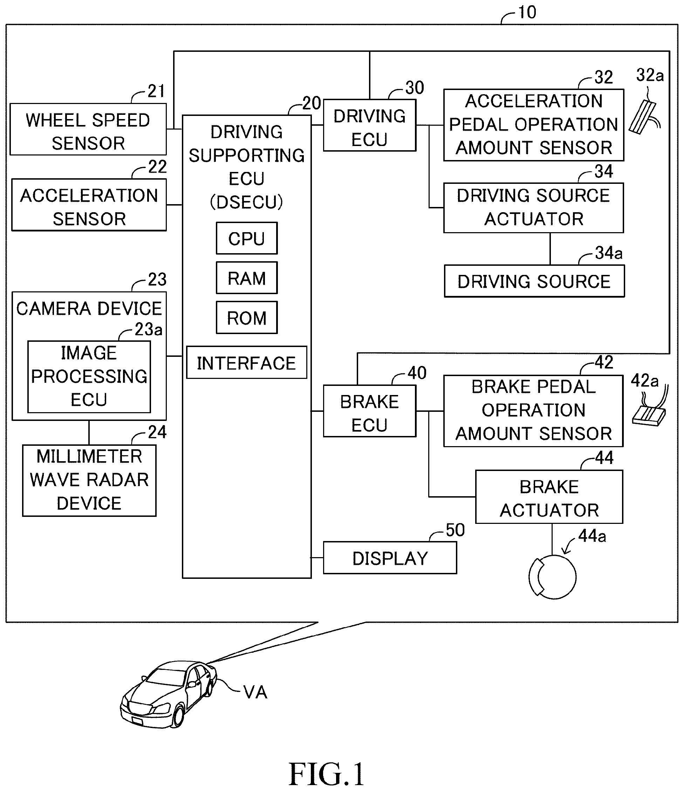

FIG. 1 is a schematic diagram of a driving supporting apparatus (present supporting apparatus) according to an embodiment.
FIG. 2A is a drawing for describing a distance threshold when a kind of a front target object is a vehicle.
FIG. 2B is a drawing for describing a distance threshold when a kind of a front target object is a pedestrian.
FIG. 3 is a drawing for describing an operation of the present supporting apparatus.
FIG. 4 is a flowchart illustrating an erroneous operation determining routine executed by a CPU of a driving supporting ECU shown in FIG. 1.
FIG. 5 is a flowchart illustrating a return determining routine executed by the CPU of the driving supporting ECU shown in FIG. 1.
FIG. 6 is a flowchart illustrating an execution determining routine executed by the CPU of the driving supporting ECU shown in FIG. 1.
FIG. 7 is a flowchart illustrating an erroneous operation corresponding control routine executed by the CPU of the driving supporting ECU shown in FIG. 1.

### DETAILED DESCRIPTION

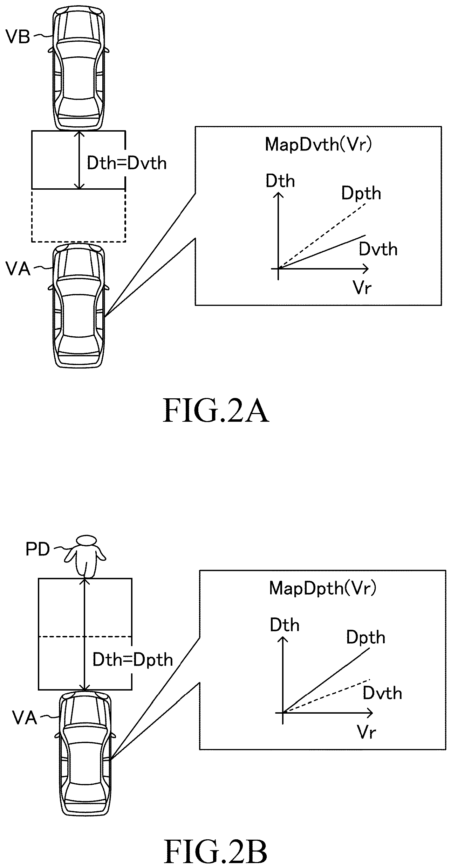

A driving supporting apparatus (hereinafter, referred to as a "present supporting apparatus") 10 according to an embodiment is applied to (or installed in) a vehicle VA (refer to FIG. 2). The present supporting apparatus 10 comprises a driving supporting ECU (hereinafter, referred to as a "DSECU") 20, a driving ECU 30, and a brake ECU 40. These ECUs are communicably connected with each other so as to be able to mutually exchange data through a CAN (Controller Area Network).

An "ECU" is an abbreviation of an "Electronic Control Unit" that is an electronic control circuit including a microcomputer as a main component. The microcomputer includes a CPU, a ROM, a RAM, and an interface (I/F). The ECU may sometimes be referred to as a "control unit", a "controller", or a "computer". The CPU is configured and/or programmed to realize various functions by executing instructions (routines) stored in a memory (the ROM). Some or all of the ECUs 20, 30, and 40 may be integrated into a single ECU.

The present supporting apparatus 10 comprises a plurality of wheel speed sensors 21, an acceleration sensor 22, a camera device 23, and a millimeter wave radar device 24.

The wheel speed sensors 21 are connected to the DSECU 20, the driving ECU 30, and the brake ECU 40 so as to mutually exchange data therebetween. The wheel speed sensors 21 are provided to respective wheels of the vehicle VA. Each of the wheel speed sensors 21 generates one pulse signal when the corresponding wheel rotates by a predetermined angle. The DSECU 20, the driving ECU 30, and the brake ECU 40 count the number of the pulse signals from each of the wheel speed sensors 21 per unit time, and obtain a wheel rotational speed (or a wheel speed) of each of the wheels based on the counted number. The DSECU 20 obtains a vehicle speed Vs indicative of a moving speed of the vehicle VA based on the wheel rotational speeds of the wheels. For instance, the DSECU 20 obtains an average of the wheel speeds of four of the wheels as the vehicle speed Vs.

The acceleration sensor 22 is connected to the DSECU 20 so as to mutually exchange data therebetween. The acceleration sensor 22 measures an acceleration G of the vehicle VA in a front-rear direction of the vehicle VA so as to generate a detected signal indicative of the acceleration G. The DSECU 20 specifies/obtains the acceleration G based on the detected signal from the acceleration sensor 22.

It should be noted that the acceleration sensor 22 may be configured to measure an acceleration in a left-right (vehicle width) direction of the vehicle VA and/or an acceleration in a vertical direction of the vehicle VA, in addition to the acceleration G in the front-rear direction of the vehicle VA.

The camera device 23 is arranged at an upper part of a front windshield and inside a cabin of the vehicle VA, and is connected to the DSECU 20 so as to mutually exchange data therebetween. The camera device 23 is configured to obtain/capture an image of an area in front of (or ahead of) the vehicle VA so as to obtain image data.

The camera device 23 includes an image processing ECU 23a. The image processing ECU 23a specifies a kind (type) of a target object, based on the image data. More specifically, the image processing ECU 23a specifies a kind of a target object by comparing an image of the target object included in the image data with image templates of a vehicle, a pedestrian, and a two wheels (or a bike).

It should be noted that a part or a whole of functions that the image processing ECU 23a realizes may be implemented by at least one of the ECUs 20, 30, and 40.

The millimeter wave radar device 24 is arranged at a position in the vicinity of a lateral center of a front end of the vehicle VA, and is connected to the DSECU 20 so as to mutually exchange data therebetween. The millimeter wave radar device 24 radiates/transmits a millimeter wave that propagates in a predetermined area ahead of (in front of) the vehicle VA. The millimeter wave is reflected from (by) a three dimensional object (target object) including a vehicle other than the vehicle VA, a pedestrian, and a two wheels. The millimeter wave radar device 24 receives the reflected wave, and obtains radar object information based on the received reflected wave. The radar object information includes a reception result of the reflected wave (power spectrum data of the reflected wave), a distance to the target object, a lateral position of the target object, and a relative speed Vr of the target object with respect to the vehicle VA.

The image processing ECU 23a recognizes an object (hereinafter, referred to as a "front target object") located/present in front of the vehicle VA based on the image data and "the reception result of the reflected wave included in the radar object information sent from the millimeter wave radar device 24", and obtains a distance to the object and a lateral position of the object. Thereafter, the image processing ECU 23a transmits target object information which includes a distance D to the target object, a lateral position of the target object, a relative speed Vr of the target object, and a kind of the target object to the DSECU 20. The relative speed Vr has a positive value when the target object is approaching (coming closer to) the vehicle VA.

Furthermore, the present supporting apparatus 10 comprises an acceleration pedal operation amount sensor 32, a driving source actuator 34, a brake pedal operation amount sensor 42, and a brake actuator 44.

The driving ECU 30 is connected with the acceleration pedal operation amount sensor 32 and the driving source actuator 34 so as to mutually exchange data therebetween.

The acceleration pedal operation amount sensor 32 detects an operation amount (i.e., an acceleration pedal operation amount AP) of an acceleration pedal 32a of the vehicle VA, and generates a detected signal indicative of the acceleration pedal operation amount AP. The acceleration pedal 32a is an acceleration operation element (i.e., accelerator) that is operated by the driver in order to increase a driving force which a driving source (e.g., a motor and an internal combustion engine) 34a of the vehicle VA generates. When the driver does not operate the acceleration pedal 32a (i.e., when the driver does not depress the acceleration pedal 32a), the acceleration pedal operation amount AP is "0". The acceleration pedal operation amount AP becomes greater, as an amount by which the driver depresses the acceleration pedal 32a becomes greater.

The driving ECU 30 obtains the acceleration pedal operation amount AP based on the detected signal from the acceleration pedal operation amount sensor 32, and notifies the DSECU 20 of the acceleration pedal operation amount AP.

The driving source actuator 34 is connected to the driving source (e.g., the motor and the internal combustion engine) 34a. The driving ECU 30 varies a driving state of the driving source 34a by controlling the driving source actuator 34. Thus, the driving ECU 30 is able to adjust a driving force applied to the vehicle VA. The driving ECU 30 controls the driving source actuator 34 in such a manner that the driving force applied to the vehicle VA becomes greater as the acceleration pedal operation amount AP becomes greater. In addition, when the driving ECU 30 receives an acceleration-deceleration instruction including a target acceleration Gtgt transmitted from DSECU 20, the driving ECU 30 controls the driving source actuator 34 in such a manner that the acceleration G of the vehicle VA coincides with (becomes equal to) the target acceleration Gtgt.

The brake ECU 40 is connected with the brake pedal operation amount sensor 42 and the brake actuator 44 so as to mutually exchange data therebetween.

The brake pedal operation amount sensor 42 detects an operation amount (i.e., a brake pedal operation amount BP) of a brake pedal 42a of the vehicle VA, and generates a detected signal indicative of the brake pedal operation amount BP. The brake ECU 40 obtains the brake pedal operation amount BP based on the detected signal from the brake pedal operation amount sensor 42.

The brake actuator 44 is connected with a well-known hydraulic brake device 44a. The brake ECU 40 varies a frictional brake force generated by the brake device 44a by controlling the brake actuator 44. Thus, the brake ECU 40 is able to adjust/control a brake force applied to the vehicle VA. The brake ECU 40 controls the brake actuator 44 in such a manner that the brake force applied to the vehicle VA becomes greater as the brake pedal operation amount BP becomes greater. In addition, when the brake ECU 40 receives the above-described acceleration-deceleration instruction transmitted from DSECU 20, the brake ECU 40 controls the brake actuator 44 in such a manner that the acceleration G of the vehicle VA coincides with the target acceleration Gtgt.

Furthermore, the present supporting apparatus 10 comprises a display 50. The DSECU 20 is connected with the display 50 so as to mutually exchange data therebetween. The display 50 receives a display signal transmitted from the DSECU 20, and display displayed information indicated by the display signal. The display 50 may be a head up display (hereinafter, referred to as a "HUD") arranged in a part of an area (display area) of the front windshield of the vehicle VA, or may be a multi information display.

### (Outline of operation)

The present assistance apparatus 10 is configured to determine that an erroneous operation condition is satisfied in a period from a time point at which a predetermined erroneous operation start condition becomes satisfied to a time point at which a predetermined return condition becomes satisfied. The erroneous operation condition is a condition that is to be satisfied when (it can be determined that) the driver is erroneously operating the acceleration pedal 32a.

The present supporting apparatus 10 specifies (obtains), based on the target object information from the camera device 23, the distance D to the target object, the lateral position of the target object, the relative speed Vr of the target object, and the kind of the target object. The present supporting apparatus 10 performs an erroneous operation corresponding control, when a distance condition and the erroneous operation condition are satisfied, the distance condition being a condition that is to be satisfied when the distance D to the target object is equal to or shorter than a distance threshold Dth. It should be noted that, when there are a plurality of front target objects, the present supporting apparatus 10 performs the erroneous operation corresponding control when a distance D to any one of the front target objects is equal to or shorter than the distance threshold Dth and the erroneous operation condition is satisfied.

The present supporting apparatus 10 performs, as the erroneous operation corresponding control, an acceleration limiting control to control the vehicle VA in such a manner that the acceleration G of the vehicle VA does not exceed a predetermined limiting acceleration Glmt in a period from a start time point of the erroneous operation corresponding control to a time point at which a predetermined time T1 elapses from the start time point of the erroneous operation corresponding control.

After the predetermined time T1 elapses from the start time point of the erroneous operation corresponding control, the present supporting apparatus 10 performs, as the erroneous operation corresponding control, a mild deceleration control to decelerate the vehicle VA at a predetermined negative acceleration Gsb.

The present supporting apparatus 10 is characterized in that it varies the distance threshold Dth depending on a kind of the front target object. The distance threshold Dth has been set based on the "minimum/shortest distance (i.e., the minimum allowable distance) between the vehicle VA and the front target object" that a typical driver varies depending on a type of the front target object. Since the present supporting apparatus 10 varies the distance threshold Dth depending on a kind of the front target object, the present supporting apparatus 10 can reduce the possibility that the present supporting apparatus 10 undesirably performs the erroneous operation corresponding control when the driver is deliberately operating the acceleration pedal 32a.

As shown in FIG. 2A, when a kind of the front target object is a vehicle (VB), the present supporting apparatus 10 obtains a distance threshold Dvth by applying the relative speed Vr of the front target object to a vehicle distance threshold map MapDvth(Vr), and sets the distance threshold Dth to the thus obtained distance threshold Dvth (i.e., Dth←Dvth).

The vehicle distance threshold map MapDvth(Vr) defines a relationship between the relative speed Vr of the front target object and the distance threshold Dvth. More specifically, according to the vehicle distance threshold map MapDvth(Vr), the distance threshold Dvth is longer as the relative speed Vr of the front target object is higher.

As shown in FIG. 2B, when a kind of the front target object is a pedestrian (PD), the present supporting apparatus 10 obtains a distance threshold Dpth by applying the relative speed Vr of the front target object to a vehicle distance threshold map MapDpth(Vr), and sets the distance threshold Dth to the thus obtained distance threshold Dpth (i.e., Dth←Dpth).

According to the vehicle distance threshold map MapDpth(Vr), the distance threshold Dpth is longer as the relative speed Vr of the front target object is higher.

As shown in FIGs. 2A and 2B, the distance threshold Dvth has been set at a value smaller than the distance threshold Dpth. This is because the minimum allowable distance between the vehicle VA and the front target object of when the kind of the front target object is a vehicle tends to be shorter than the minimum allowable distance between the vehicle VA and the front target object of when the kind of the front target object is a pedestrian, according to a typical driver. The minimum allowable distance between the vehicle VA and the front target object of when the kind of the front target object is a vehicle tends to be relatively short, because it is necessary for the typical driver to cause the vehicle VA to come closer to a vehicle in front of the vehicle VA, when he/she intends to overtake or pass the vehicle in front of the vehicle VA.

In this manner, since the distance threshold Dth is set to a value that corresponds to the minimum allowable distance varying depending on a kind of the front target object, the possibility that the unnecessary erroneous operation corresponding control is performed can be decreased.

### (Example of operation)

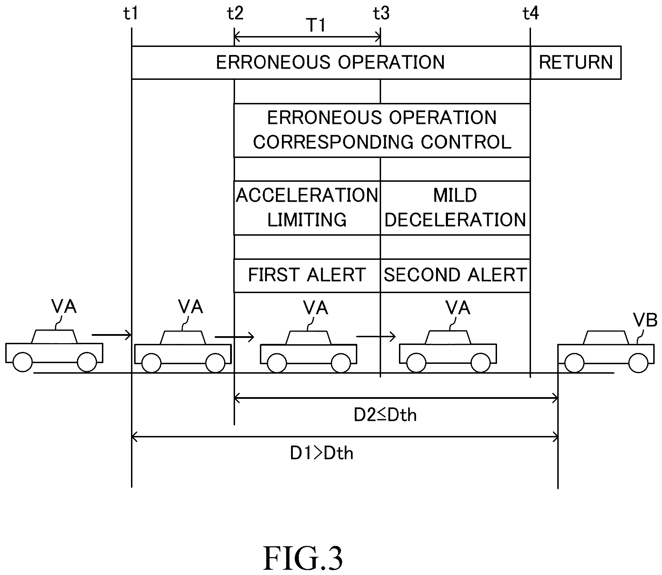

Example of operations of the present supporting apparatus 10 will next be described with reference to FIG. 3.

### <Time point t1>

At a time point t1, the present supporting apparatus 10 determines that the erroneous operation start condition becomes satisfied. However, the present supporting apparatus 10 does not start performing the erroneous operation corresponding control at the time point t1, because a distance D1 to the front target object is longer than the distance threshold Dth at the time point t1.

The erroneous operation start condition becomes satisfied, when all of first to third conditions described below are satisfied.

First condition: the first condition is satisfied when the vehicle speed Vs is equal to or lower than a speed threshold Vsth.

Second condition: the second condition is satisfied when the acceleration pedal operation amount AP is equal to or greater than an operation amount threshold APth.

Third condition: the third condition is satisfied when an acceleration pedal operation amount change rate Vap is equal to or greater than an operation amount change rate threshold Vapth.

The return condition becomes satisfied, when a fourth condition described below is satisfied.

Fourth condition: the fourth condition is satisfied when the acceleration pedal operation amount AP is smaller than a return operation amount threshold APcth.

The return operation amount threshold APcth has been set at a value smaller than the operation amount threshold APth. For example, the return operation amount threshold APcth is set at "0". In this case, the CPU determines that the return condition becomes satisfied when the driver takes his/her foot off the acceleration pedal 32a.

### <Time point t2>

At a time point t2, a distance D2 becomes equal to or shorter than the distance threshold Dth. It is assumed that the return condition does not become satisfied in a period from the time point t1 to the time point t2. Thus, the present supporting apparatus 10 determines that the erroneous operation condition has been satisfied. At the time point t2, the present supporting apparatus 10 starts (performing) the erroneous operation corresponding control, because the distance condition is satisfied (the distance D2 is equal to or shorter than the distance threshold Dth) and the erroneous operation condition is satisfied. More specifically, the present supporting apparatus 10 performs the acceleration limiting control as the erroneous operation corresponding control, and performs a first alert (first warning) to cause the display 50 to display a message stating that the acceleration pedal 32a is depressed/operated.

### <Time point t3>

At a time point t3, the predetermined time T1 elapses since the time point t2 at which the erroneous operation corresponding control is started. At the time point t3, the present supporting apparatus 10 starts (performing) the mild deceleration control as the erroneous operation corresponding control, and performs a second alert (second warning) to cause the display 50 to display a message urging the driver to depress/operate the brake pedal 42 (i.e., a message stating "Depress brake pedal") in addition to the above-described message.

### <Time point t4>

At a time point t4, the present supporting apparatus 10 determines that the return condition becomes satisfied, and therefore, determines that the driver is no longer erroneously operating the acceleration pedal 32a (the driver is not performing the erroneous operation). At the time point t4, the present supporting apparatus 10 ends the erroneous operation corresponding control.

In the example shown in FIG. 3, the erroneous operation start condition becomes satisfied at the time point t1 that is before the time point t2 at which the distance condition becomes satisfied. Whereas, if the erroneous operation start condition becomes satisfied at or after the time point t2 at which the distance condition becomes satisfied, the present supporting apparatus 10 starts (performing) the erroneous operation corresponding control at the time point at which the erroneous operation start condition becomes satisfied.

### (Specific operation)

### <Erroneous operation determining routine>

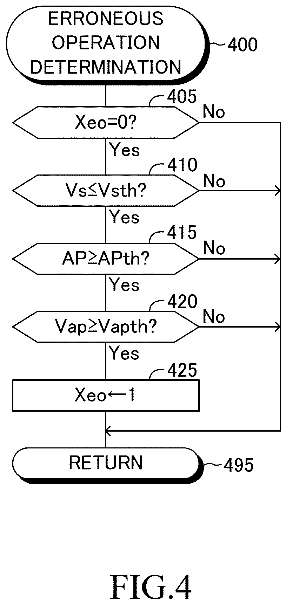

The CPU of the DSECU 20 (hereinafter, the "CPU" means the CPU of the DSECU 20 unless otherwise specified) is configured or programmed to execute a routine (i.e., an erroneous operation determining routine) shown by a flowchart in FIG. 4 every time a predetermined time elapses.

When an appropriate time point comes, the CPU starts processing from step 400 in FIG. 4, and proceeds to step 405. At step 405, the CPU determines whether or not a value of an erroneous operation flag Xeo is "0".

The value of the erroneous operation flag Xeo is set to "1" when the erroneous operation start condition becomes satisfied, and is set to "0" when the return condition becomes satisfied. In other words, the value of the erroneous operation flag Xeo is set to "1" when the erroneous operation condition is satisfied. It should be noted that the CPU sets the value of the erroneous operation flag Xeo to "0" in an unillustrated initialization routine executed by the CPU when a position of an unillustrated ignition key switch of the vehicle VA is changed to an on position from an off position.

When the value of the erroneous operation flag Xeo is "0", the CPU makes a "Yes" determination at step 405, and proceeds step 410. At step 410, the CPU determines whether or not the vehicle speed Vs is equal to or lower than the speed threshold Vsth.

When the vehicle speed Vs is higher than the speed threshold Vsth, the CPU makes a "No" determination at step 410, and proceeds to step 495 to terminate the present routine tentatively.

Whereas, when the vehicle speed Vs is equal to or lower than the speed threshold Vsth, the CPU makes a "Yes" determination at step 410, and proceeds step 415. At step 415, the CPU determines whether or not the acceleration pedal operation amount AP is equal to or greater than the predetermined operation amount threshold APth.

When the acceleration pedal operation amount AP is smaller than the predetermined operation amount threshold APth, the CPU makes a "No" determination at step 415, and proceeds to step 495 to terminate the present routine tentatively.

Whereas, when the acceleration pedal operation amount AP is equal to or greater than the operation amount threshold APth, the CPU makes a "Yes" determination at step 415, and proceeds step 420. At step 420, the CPU determines whether or not the acceleration pedal operation amount change rate Vap is equal to or greater than the predetermined operation amount change rate threshold Vapth.

The CPU obtains a subtraction value dAP by subtracting the acceleration pedal operation amount AP of when the CPU previously executed the present routine from the acceleration pedal operation amount AP of when the CPU currently executes the present routine. Thereafter, the CPU obtains the acceleration pedal operation amount change rate Vap by dividing the subtraction value dAP by a time dt that is an execution interval of the present routine.

When the acceleration pedal operation amount change rate Vap is smaller than the operation amount change rate threshold Vapth, the CPU makes a "No" determination at step 420, and proceeds to step 495 to terminate the present routine tentatively.

Whereas, when the acceleration pedal operation amount change rate Vap is equal to or greater than the operation amount change rate threshold Vapth, the CPU makes a "Yes" determination at step 420, and proceeds step 425. At step 425, the CPU sets the value of the erroneous operation flag Xeo to "1", and proceeds to step 495 to terminate the present routine tentatively.

If the value of the erroneous operation flag Xeo is "1" when the CPU proceeds to step 405, the CPU makes a "No" determination at step 405, and proceeds to step 495 to terminate the present routine tentatively.

### <Return determining routine>

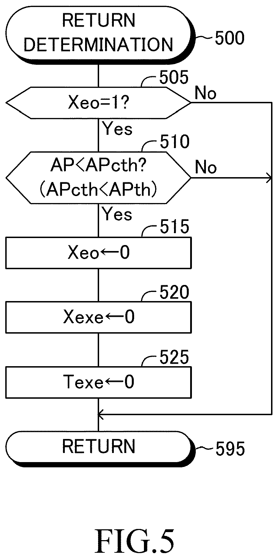

The CPU is configured or programmed to execute a routine (i.e., a return determining routine) shown by a flowchart in FIG. 5 every time a predetermined time elapses.

When an appropriate time point comes, the CPU starts processing from step 500 in FIG. 5, and proceeds to step 505. At step 505, the CPU determines whether or not the value of the erroneous operation flag Xeo is "1".

The value of the erroneous operation flag Xeo is "0", the CPU makes a "No" determination at step 505, and proceeds to step 595 to terminate the present routine tentatively.

When the value of the erroneous operation flag Xeo is "1", the CPU makes a "Yes" determination at step 505, and proceeds to step 510. At step 510, the CPU determines whether or not the acceleration pedal operation amount AP is smaller than the predetermined return operation amount threshold APcth.

When the acceleration pedal operation amount AP is equal to or greater than the return operation amount threshold APcth, the CPU makes a "No" determination at step 510, and proceeds to step 595 to terminate the present routine tentatively.

Whereas, when the acceleration pedal operation amount AP is smaller than the return operation amount threshold APcth, the CPU determines that the return condition becomes satisfied, and the erroneous operation condition is no longer satisfied. In this case, the CPU makes a "Yes" determination at step 510, and sequentially executes the processes of step 515 to step 525.

Step 515: the CPU sets the value of the erroneous operation flag Xeo to "0".

Step 520: the CPU sets a value of an execution flag Xexe to "0".

The value of the execution flag Xexe is set to "1" when the erroneous operation corresponding control is performed. It should be noted that the CPU sets the value of the execution flag Xexe to "0" in the above-described initialization routine.

Step 525: the CPU sets a value of an execution time timer Texe to "0".

The execution time timer Texe is a timer for measuring an elapsed time from the start time point of the erroneous operation corresponding control.

Thereafter, the CPU proceeds to step 595 to terminate the present routine tentatively.

### <Execution determining routine>

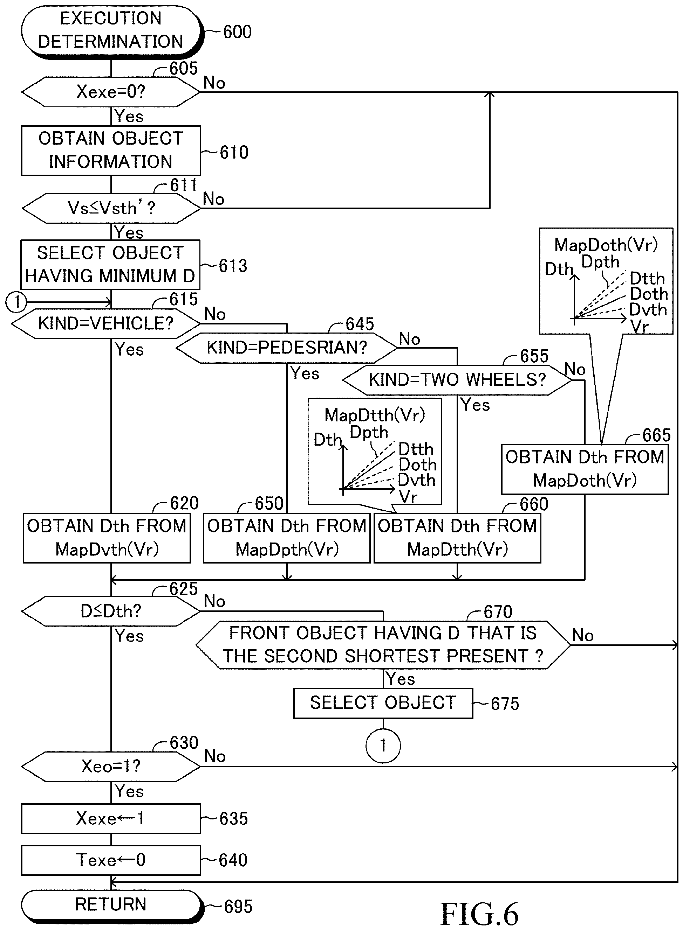

The CPU is configured or programmed to execute a routine (i.e., an execution determining routine) shown by a flowchart in FIG. 6 every time a predetermined time elapses.

When an appropriate time point comes, the CPU starts processing from step 600 in FIG. 6, and proceeds to step 605. At step 605, the CPU determines whether or not the value of the execution flag Xexe is "0".

When the value of the execution flag Xexe is "0", the CPU makes a "Yes" determination at step 605, and sequentially executes the processes of step 610 and step 611.

Step 610: the CPU obtains the target object information from the camera device 23.

Step 611: the CPU determines whether or not the vehicle speed Vs is higher than a predetermined speed threshold Vsth'. It is preferable that the speed threshold Vsth' be set at a value higher than the speed threshold Vsth. However, the speed threshold Vsth' may be set at a value equal to or lower than the speed threshold Vsth. If the speed threshold Vsth' has been set at the value equal to or lower than the speed threshold Vsth, the CPU cannot start (performing) the erroneous operation corresponding control when the erroneous operation start condition becomes satisfied before the distance condition becomes satisfied.

When the vehicle speed Vs is equal to or lower than the speed threshold Vsth', the CPU determines that the vehicle speed Vs is relatively low. In this case, the CPU makes a "Yes" determination at step 611, and sequentially executes the processes of step 613 and step 615.

Step 613: the CPU selects the front target object having the shortest distance D from among the front target objects. Hereinafter, the selected front target object is referred to as a "selected target object".

Step 615: the CPU determines whether or not a kind of the selected target object is a vehicle.

When the kind of the selected target object is a vehicle, the CPU makes a "Yes" determination at step 615, and sequentially executes the processes of step 620 and step 625.

Step 620: the CPU obtains the distance threshold Dvth by applying the relative speed Vr of the selected target object to the vehicle distance threshold map MapDvth(Vr), and sets the distance threshold Dth to the distance threshold Dvth (i.e., Dth←Dvth).

Step 625: the CPU determines whether or not the distance D of the selected target object is equal to or shorter than the distance threshold Dth.

When the distance D of the selected target object is equal to or shorter than the distance threshold Dth, the CPU makes a "Yes" determination at step 625, and proceeds to step 630. At step 630, the CPU determines whether or not the value of the erroneous operation flag Xeo is "1".

When the value of the erroneous operation flag Xeo is "0", the CPU makes a "No" determination at step 630, and proceeds to step 695 to terminate the present routine tentatively.

Whereas, when the value of the erroneous operation flag Xeo is "1", the CPU makes a "Yes" determination at step 630, and sequentially executes the processes of step 635 and step 640.

Step 635: the CPU sets the value of the execution flag Xexe to "1".

Step 640: the CPU sets the value of the execution time timer Texe to "0".

Thereafter, the CPU proceeds to step 695 to terminate the present routine tentatively.

If the kind of the selected target object is not a vehicle when the CPU proceeds to step 615, the CPU makes a "No" determination at step 615, and proceeds to step 645. At step 645, the CPU determines whether or not the kind of the selected target object is a pedestrian.

When the kind of the selected target object is a pedestrian, the CPU makes a "Yes" determination at step 645, executes the process of step 650, and proceeds to step 625.

Step 650: the CPU obtains the distance threshold Dpth by applying the relative speed Vr of the selected target object to the pedestrian distance threshold map MapDpth(Vr), and sets the distance threshold Dth to the distance threshold Dpth (i.e., Dth←Dpth).

If the kind of the selected target object is not a pedestrian when the CPU proceeds to step 645, the CPU makes a "No" determination at step 645, and proceeds to step 655. At step 655, the CPU determines whether or not the kind of the selected target object is a two wheels.

When the kind of the selected target object is a two wheels, the CPU makes a "Yes" determination at step 655, executes the process of step 660, and proceeds to step 625.

Step 660: the CPU obtains the distance threshold Dtth by applying the relative speed Vr of the selected target object to the two wheels distance threshold map MapDtth(Vr), and sets the distance threshold Dth to the distance threshold Dtth (i.e., Dth←Dtth).

If the kind of the selected target object is not a two wheel (for example, the kind of the selected target object is a wall, a guard rail, or the like) when the CPU proceeds to step 655, the CPU makes a "No" determination at step 655, executes the process of step 665, and proceeds to step 625.

Step 665: the CPU obtains the distance threshold Doth by applying the relative speed Vr of the selected target object to the other object distance threshold map MapDoth(Vr), and sets the distance threshold Dth to the distance threshold Doth (i.e., Dth←Doth).

It should be noted that, as understood from the two wheels distance threshold map MapDtth(Vr) and the other object distance threshold map MapDoth(Vr) shown in FIG. 6, each of the distance threshold maps has been set as follows for an certain arbitrary relative speed Vr of the selected target object, as just one example.

The distance threshold Dpth is the longest.

The distance threshold Dvth is the shortest.

The distance threshold Dtth is longer than the distance threshold Doth.

Each of the distance thresholds Dpth, Dtth, Doth, and Dvth is longer, as the relative speed Vr is higher.

If the distance D of the selected target object is longer than the distance threshold Dth when the CPU proceeds to step 625, the CPU makes a "No" determination at step 625, and proceeds to step 670. At step 670, the CPU determines whether or not there is a front target object whose distance D is the second shortest (longer than and next to the distance D of the selected target object).

If there is the front target object whose distance D is the second shortest, the CPU makes a "Yes" determination at step 670, and proceeds to step 675. At step 675, the CPU employs the front target object whose distance D is the second shortest as a new selected target object, and repeats the process of step 615 and the processes of steps following the step 615.

In contrast, if the front target object whose distance D is the second shortest is not present, the CPU makes a "No" determination at step 670, and proceeds to step 695 to terminate the present routine tentatively.

In this manner, the CPU sequentially employs, as the selected target object, one of the front target objects in ascending order with respect to the distance D, and determines whether or not the distance D of the selected target object is equal to or shorter than the distance threshold Dth. This enables the CPU to make the above-described determinations regarding the front target objects in the order corresponding to the front target object whose distance D is more likely to be equal to or shorter than the distance threshold Dth. Therefore, processing load of the CPU can be decreased.

Whereas, if the vehicle speed Vs is higher than the speed threshold Vsth' when the CPU proceeds to step 611, the CPU determines that the vehicle speed Vs is relatively high. In this case, the CPU makes a "No" determination at step 611, and the CPU proceeds to step 695 to terminate the present routine tentatively.

An apparatus may be configured to start (performing) the erroneous operation corresponding control, when the time to collision (required time to collision) TTC is equal to or shorter than a predetermined start time threshold and when the value of the erroneous operation flag Xeo is "1". The TTC is a time necessary/required for the vehicle VA to collide with the front target object, and is obtained by dividing the distance D by the relative speed Vr.

When the vehicle speed Vs is relatively low, the TTC tends to be long, and thus, does not tend to be shorter than the start time threshold Tsth. This may reduce a possibility that a necessary acceleration limiting control is performed. When the vehicle speed Vs is relatively high, it is preferable that a control to decelerate the vehicle VA be performed instead of the acceleration limiting control. Accordingly, only when the vehicle speed Vs is relatively low, the CPU is configured to make a "Yes" determination at step 611, and proceed to step 613 so as to determine whether to perform the acceleration limiting control based on the distance D. Thus, the CPU can increase the possibility that the necessary acceleration limiting control is performed when the vehicle speed Vs is relatively low.

### <Erroneous operation corresponding control routine>

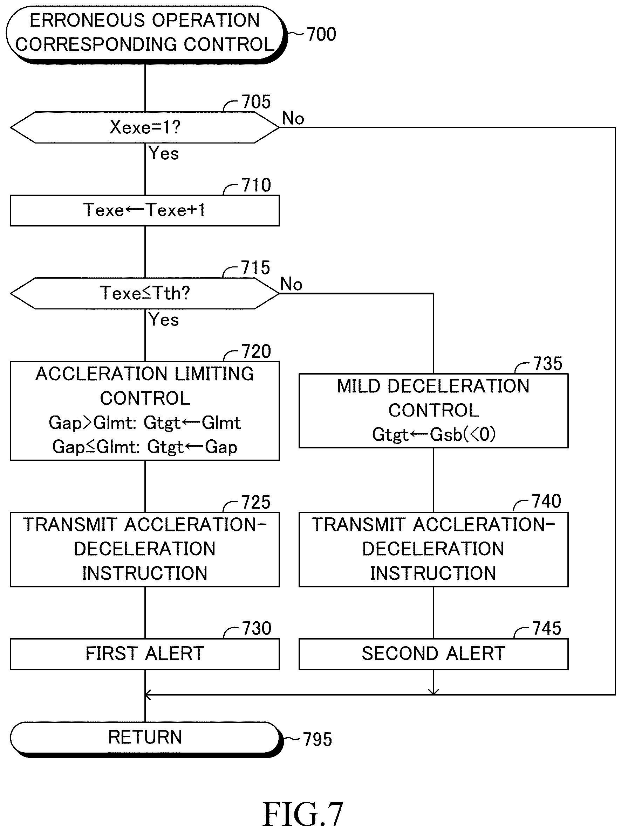

The CPU is configured or programmed to execute a routine (i.e., an erroneous operation corresponding control routine) shown by a flowchart in FIG. 7 every time a predetermined time elapses.

When an appropriate time point comes, the CPU starts processing from step 700 in FIG. 7, and proceeds to step 705. At step 705, the CPU determines whether or not the value of the execution flag Xexe is "1".

The value of the execution flag Xexe is "0", the CPU makes a "No" determination at step 705, and proceeds to step 795 to terminate the present routine tentatively.

When the value of the execution flag Xexe is "1", the CPU makes a "Yes" determination at step 705, and sequentially executes the processes of step 710 and step 715.

Step 710: the CPU increments the value of the execution time timer Texe by "1".

Step 715: the CPU determines whether or not the value of the execution time timer Texe is equal to or smaller than a threshold Tth. The threshold Tth has been set to a value that the execution time timer Texe reaches, when the predetermined time T1 elapses from the start time point of the erroneous operation corresponding control.

When the value of the execution time timer Texe is equal to or smaller than the threshold Tth, the CPU makes a "Yes" determination at step 715, and sequentially executes the processes of step 720 to step 730.

Step 720: the CPU performs the acceleration limiting control.

More specifically, the CPU obtains the acceleration pedal operation amount AP from the driving ECU 30, and obtains an acceleration pedal corresponding acceleration Gap that corresponds to the acceleration pedal operation amount AP. The acceleration pedal corresponding acceleration Gap becomes larger, as the acceleration pedal operation amount AP becomes greater.

When the acceleration pedal corresponding acceleration Gap is greater than the predetermined limiting acceleration Glmt, the CPU sets the target acceleration Gtgt to the limiting acceleration Glmt. When the acceleration pedal corresponding acceleration Gap is equal to or smaller than the limiting acceleration Glmt, the CPU sets the target acceleration Gtgt to the acceleration pedal corresponding acceleration Gap.

Step 725: the CPU transmits the acceleration-deceleration instruction including the target acceleration Gtgt to the driving ECU 30 and the brake ECU 40.

Step 730: the CPU performs the first alert (first warning).

Thereafter, the CPU proceeds to step 795 to terminate the present routine tentatively.

Whereas, when the value of the execution time timer Texe is greater than the threshold Tth, the CPU makes a "No" determination at step 715, and sequentially executes the processes of step 735 to step 745.

Step 735: the CPU performs the mild deceleration control.

More specifically, the CPU sets the target acceleration Gtgt to the predetermined negative acceleration Gsb.

Step 740: the CPU transmits the acceleration-deceleration instruction including the target acceleration Gtgt to the driving ECU 30 and the brake ECU 40.

Step 745: the CPU performs the second alert (second warning).

Thereafter, the CPU proceeds to step 795 to terminate the present routine tentatively.

As understood from the above, the present supporting apparatus 10 employs the distance threshold Dth that varies depending on the kind of the front target object, and thus, can reduce the possibility that the unnecessary erroneous operation corresponding control is performed.

The present invention should not be limited to the above-described embodiment, and may employ various modifications within the scope of the claims.

### (First modification)

In the above-described embodiment, the CPU is configured to determine that the erroneous operation start condition becomes satisfied, when all of the above-described first to third conditions are satisfied (refer to FIG. 4). In the present modification, however, the CPU is configured to determine that the erroneous operation start condition becomes satisfied, when the first condition is satisfied and when one of the second condition and the third condition is satisfied.

It should be noted that the CPU may be configured to determine that the erroneous operation start condition becomes satisfied, when at least one of the second condition and the third condition is satisfied, even if the first condition is not satisfied.

### (Second modification)

The CPU may be configured to determine that the return condition becomes satisfied, when at least one of the above-described fourth condition, the following fifth condition, and the following sixth condition is satisfied.

Fifth condition: the fifth condition is satisfied when the driver continues operating the brake pedal 42a for a predetermined time.

Sixth condition: the sixth condition is satisfied when the driver operates an unillustrated cancel button.

### (Third modification)

The CPU may be configured to determine whether or not the erroneous operation start condition becomes satisfied, only when the distance condition is satisfied. More specifically, the CPU does not execute the erroneous operation determining routine shown in FIG. 4 every time the predetermined time elapses. Instead, the CPU executes a sub routine that is the same as the erroneous operation determining routine shown in FIG. 4, when and after the distance D is equal to or shorter than the distance threshold Dth (i.e., when and after the CPU makes a "Yes" determination at step 625). In this case, when the CPU makes a "No" determination at step 670 (i.e. when there is no front target object whose distance D is equal to or shorter than the distance threshold Dth), the CPU sets the value of the erroneous operation flag Xeo to "0".

### (Fourth modification)

In the above-described embodiment, the CPU is configured to perform, as the erroneous operation corresponding control, the acceleration limiting control and the mild deceleration control. However, the CPU may be configured to perform at least the acceleration limiting control as the erroneous operation corresponding control, and needs not necessarily perform the mild deceleration control as the erroneous operation corresponding control.

### (Fifth modification)

The camera device 23 may be a stereo camera device, or may be a monocular camera device. The millimeter wave radar device 24 may be replaced with a remote sensing device that is capable of detecting an object by radiating a radio wave other than the millimeter wave and receiving its reflected wave. In addition, the present supporting apparatus 10 does not necessarily comprise the millimeter wave radar device 24, as long as the present supporting apparatus 10 can accurately specify (obtain) a position of an object with respect to the vehicle VA based on camera object information obtained from the image data. When the present supporting apparatus 10 does not comprise the millimeter wave radar device 24, the image processing ECU 23a obtains the relative speed Vr of the front target object based on a history of the position of the front target object with respect to the vehicle VA.

### (Sixth modification)

The present supporting apparatus 10 may be applied to a vehicle including a vehicle with an internal combustion engine, a hybrid electric vehicle (HEV), a plug-in hybrid electric vehicle (PHEV), a fuel cell electric vehicle (FCEV), and a battery electric vehicle (BEV).

The present invention includes a nonvolatile storage media, storing a program for implementing the functions of the present supporting apparatus 10, and from which the computer can read the stored program.

## Claims

1. A driving supporting apparatus comprising:
an acceleration operation element (32a) operable by a driver of a vehicle to increase a driving force which a driving source (34a) of said vehicle generates; and
a control unit (20, 30, 40) capable of performing an acceleration limiting control (step 720) to control said vehicle in such a manner that an acceleration of said vehicle does not exceed a predetermined limiting acceleration (Glmt),
wherein, said control unit is configured to:
set a distance threshold to a value varying depending on a kind of a front target object that is present in front of said vehicle (step 620, step 625, step 650, step 660, step 665); and
perform said acceleration limiting control (step 635, step 700 to step 795) when a distance condition and an erroneous operation condition are satisfied (step 625: Yes, step 410: Yes, step 415: Yes, step 420: Yes, step 425: Yes, step 630: Yes), said distance condition being a condition that is to be satisfied when a distance between said vehicle and said front target object is equal to or shorter than said distance threshold, and said erroneous operation condition being a condition that is to be satisfied when said driver is erroneously operating said acceleration operation element.

2. The driving supporting apparatus according to claim 1,
wherein, said control unit is configured to set, when said kind of said front target object is a vehicle, said distance threshold to a value that is smaller than a value of said distance threshold that is set when said kind of said front target object is a pedestrian.

3. The driving supporting apparatus according to claim 1,
wherein, said control unit is configured to determine that said erroneous operation condition is satisfied in a period from a time point at which at least one of a condition that is to be satisfied when an operation amount of said acceleration operation element is equal to or greater than a predetermined operation amount threshold and a condition that is to be satisfied when a change rate of said operation amount of said acceleration operation element is equal to or greater than a predetermined operation amount change rate threshold becomes satisfied (step 410: Yes, step 415: Yes) to a time point at which a predetermined return condition that is to be satisfied when said driver ends a state in which said driver is erroneously operating said acceleration operation element becomes satisfied (step 510: Yes).

4. The driving supporting apparatus according to claim 1,
wherein, said control unit is configured to perform said acceleration limiting control, when said distance condition and said erroneous operation condition are satisfied (step 625; Yes, step 630: Yes), in a case in which a vehicle speed indicative of a speed of said vehicle is equal to or lower than a predetermined speed threshold (step 611: Yes).

5. The driving supporting apparatus according to claim 1,
wherein, said control unit is configured to vary said distance threshold in such a manner that said distance threshold is greater as a relative speed of said front target object with respect to said vehicle is higher.

6. The driving supporting apparatus according to claim 1,
wherein, said control unit is configured to:
when there are a plurality of said front target objects, sequentially set said distance threshold to said value determined based on said kind of said front target object that is selected from among said front target objects in ascending order with respect to said distance to said vehicle, and determine whether or not said distance of said target object that is selected in said ascending order is equal to or shorter than said set distance threshold (step 613, step 615 to step 625, step 645 to step 665, step 670, step 675); and
determine that said distance condition is satisfied when there is any front target object whose distance is equal to or shorter than said set distance threshold (step 625: Yes).

7. A driving supporting method for performing an acceleration limiting control (step 720) to limit an acceleration of a vehicle in such a manner that said acceleration of said vehicle does not exceed a predetermined limiting acceleration comprising:
a first step of setting a distance threshold to a value varying depending on a kind of a front target object that is present in front of said vehicle (step 620, step 625, step 650, step 660, step 665); and
a second step of performing said acceleration limiting control (step 635, step 700 to step 795) when a distance condition and an erroneous operation condition are satisfied (step 625: Yes, step 410: Yes, step 415: Yes, step 420: Yes, step 425: Yes, step 630: Yes), said distance condition being a condition that is to be satisfied when a distance between said vehicle and said front target object is equal to or shorter than said distance threshold, and said erroneous operation condition being a condition that is to be satisfied when a driver of said vehicle is erroneously operating an acceleration operation element (32a) that is to be operated in order to increase a driving force which a driving source (34a) of said vehicle generates.

8. A program storage device, readable by machine, storing a program for performing an acceleration limiting control (step 720) to limit an acceleration of a vehicle in such a manner that said acceleration of said vehicle does not exceed a predetermined limiting acceleration,
said program causing a computer (20, 30, 40) to implement processes of:
a first step of setting a distance threshold to a value varying depending on a kind of a front target object that is present in front of said vehicle (step 620, step 625, step 650, step 660, step 665); and
a second step of performing said acceleration limiting control (step 635, step 700 to step 795) when a distance condition and an erroneous operation condition are satisfied (step 625: Yes, step 410: Yes, step 415: Yes, step 420: Yes, step 425: Yes, step 630: Yes), said distance condition being a condition that is to be satisfied when a distance between said vehicle and said front target object is equal to or shorter than said distance threshold, and said erroneous operation condition being a condition that is to be satisfied when a driver of said vehicle is erroneously operating an acceleration operation element (32a) that is to be operated in order to increase a driving force which a driving source (34a) of said vehicle generates.

## Patentansprüche

1. Fahrunterstützungsvorrichtung, Folgendes umfassend:
ein Beschleunigungsbetriebselement (32a), das von einem Fahrer eines Fahrzeugs bedient werden kann, um eine Antriebskraft zu erhöhen, die eine Antriebsquelle (34a) des Fahrzeugs erzeugt, und
eine Steuereinheit (20, 30, 40), die in der Lage ist, eine Beschleunigungsbegrenzungssteuerung (Schritt 720) durchzuführen, um das Fahrzeug derart zu steuern, dass eine Beschleunigung des Fahrzeugs eine festgelegte begrenzende Beschleunigung (Glmt) nicht überschreitet,
wobei die Steuereinheit für Folgendes konfiguriert ist:
Einstellen eines Distanzschwellenwertes auf einen Wert, der abhängig von einer Art eines Frontzielobjekts variiert, das vor dem Fahrzeug vorhanden ist (Schritt 620, Schritt 625, Schritt 650, Schritt 660, Schritt 665), und
Durchführen der Beschleunigungsbegrenzungssteuerung (Schritt 635, Schritt 700 bis Schritt 795), wenn eine Distanzbedingung und eine Bedingung irrtümlichen Betriebs erfüllt sind (Schritt 625: Ja, Schritt 410: Ja, Schritt 415: Ja, Schritt 420: Ja, Schritt 425: Ja, Schritt 630: Ja), wobei die Distanzbedingung eine Bedingung ist, die erfüllt sein soll, wenn eine Distanz zwischen dem Fahrzeug und dem Frontzielobjekt gleich oder kleiner als der Distanzschwellenwert ist, und die Bedingung irrtümlichen Betriebs eine Bedingung ist, die erfüllt sein soll, wenn der Fahrer irrtümlich das Beschleunigungsbetriebselement bedient.

2. Fahrunterstützungsvorrichtung nach Anspruch 1,
wobei die Steuereinheit dafür konfiguriert ist, den Distanzschwellenwert, wenn das Frontzielobjekt von der Art eines Fahrzeugs ist, auf einen Wert einzustellen, der kleiner als ein Wert des Distanzschwellenwertes ist, der eingestellt wird, wenn das Frontzielobjekt von der Art eines Fußgängers ist.

3. Fahrunterstützungsvorrichtung nach Anspruch 1,
wobei die Steuereinheit dafür konfiguriert ist zu bestimmen, dass die Bedingung irrtümlichen Betriebs in einer Zeitspanne von einem Zeitpunkt, zu dem mindestens eine von einer Bedingung, die erfüllt sein soll, wenn ein Betriebsumfang des Beschleunigungsbetriebselements gleich oder größer als ein festgelegter Betriebsumfangsschwellenwert ist, und einer Bedingung, die erfüllt sein soll, wenn eine Veränderungsrate des Betriebsumfangs des Beschleunigungsbetriebselements gleich oder größer als ein festgelegter Schwellenwert der Veränderungsrate des Betriebsumfangs ist, erfüllt wird (Schritt 410: Ja, Schritt 415: Ja), bis zu einem Zeitpunkt, zu dem eine festgelegte Rückkehrbedingung, die erfüllt sein soll, wenn der Fahrer einen Zustand beendet, in dem der Fahrer irrtümlich das Beschleunigungsbetriebselement bedient (Schritt 510: Ja), erfüllt wird.

4. Fahrunterstützungsvorrichtung nach Anspruch 1,
wobei die Steuereinheit dafür konfiguriert ist, die Beschleunigungsbegrenzungssteuerung durchzuführen, wenn die Distanzbedingung und die Bedingung irrtümlichen Betriebs erfüllt sind (Schritt 625: Ja, Schritt 630: Ja), in einem Fall, in dem eine Fahrzeuggeschwindigkeit, die eine Angabe einer Geschwindigkeit des Fahrzeugs ist, gleich oder kleiner als ein festgelegter Geschwindigkeitsschwellenwert ist (Schritt 611: Ja).

5. Fahrunterstützungsvorrichtung nach Anspruch 1,
wobei die Steuereinheit dafür konfiguriert ist, den Distanzschwellenwert derart zu variieren, dass der Distanzschwellenwert höher ist, wenn eine relative Geschwindigkeit des Frontzielobjekts in Bezug auf das Fahrzeug höher ist.

6. Fahrunterstützungsvorrichtung nach Anspruch 1,
wobei die Steuereinheit für Folgendes konfiguriert ist:
wenn mehrere Frontzielobjekte vorhanden sind, fortlaufendes Einstellen des Distanzschwellenwertes auf den Wert, der basierend auf der Art des Frontzielobjekts bestimmt wird, das aus den Frontzielobjekten in bezüglich der Distanz zum Fahrzeug aufsteigender Reihenfolge ausgewählt wird, und Bestimmen, ob die Distanz des Zielobjekts, das in der aufsteigenden Reihenfolge ausgewählt ist, gleich oder kleiner als der eingestellte Distanzschwellenwert ist oder nicht (Schritt 613, Schritt 615 bis Schritt 625, Schritt 645 bis Schritt 665, Schritt 670, Schritt 675), und
Bestimmen, dass die Distanzbedingung erfüllt ist, wenn ein Frontzielobjekt vorhanden ist, dessen Distanz gleich oder kleiner als der eingestellte Distanzschwellenwert ist (Schritt 625: Ja).

7. Fahrunterstützungsverfahren zum Durchführen einer Beschleunigungsbegrenzungssteuerung (Schritt 720), um eine Beschleunigung eines Fahrzeugs derart zu begrenzen, dass die Beschleunigung des Fahrzeugs eine festgelegte begrenzende Beschleunigung nicht überschreitet, Folgendes umfassend:
einen ersten Schritt des Einstellens eines Distanzschwellenwertes auf einen Wert, der abhängig von einer Art eines Frontzielobjekts variiert, das vor dem Fahrzeug vorhanden ist (Schritt 620, Schritt 625, Schritt 650, Schritt 660, Schritt 665), und
einen zweiten Schritt des Durchführens der Beschleunigungsbegrenzungssteuerung (Schritt 635, Schritt 700 bis Schritt 795), wenn eine Distanzbedingung und eine Bedingung irrtümlichen Betriebs erfüllt sind (Schritt 625: Ja, Schritt 410: Ja, Schritt 415: Ja, Schritt 420: Ja, Schritt 425: Ja, Schritt 630: Ja), wobei die Distanzbedingung eine Bedingung ist, die erfüllt sein soll, wenn eine Distanz zwischen dem Fahrzeug und dem Frontzielobjekt gleich oder kleiner als der Distanzschwellenwert ist, und die Bedingung irrtümlichen Betriebs eine Bedingung ist, die erfüllt sein soll, wenn ein Fahrer irrtümlich ein Beschleunigungsbetriebselement (32a) bedient, das zu bedienen ist, um eine Antriebskraft zu erhöhen, die eine Antriebsquelle (34a) des Fahrzeugs erzeugt.

8. Programmspeichervorrichtung, das maschinenlesbar ist und das ein Programm zum Durchführen einer Beschleunigungsbegrenzungssteuerung (Schritt 720) zum Begrenzen einer Beschleunigung eines Fahrzeugs derart, dass die Beschleunigung des Fahrzeugs eine festgelegte begrenzende Beschleunigung nicht überschreitet, speichert,
wobei das Programm einen Computer (20, 30, 40) veranlasst, folgende Prozesse zu implementieren:
einen ersten Schritt des Einstellens eines Distanzschwellenwertes auf einen Wert, der abhängig von einer Art eines Frontzielobjekts variiert, das vor dem Fahrzeug vorhanden ist (Schritt 620, Schritt 625, Schritt 650, Schritt 660, Schritt 665), und
einen zweiten Schritt des Durchführens der Beschleunigungsbegrenzungssteuerung (Schritt 635, Schritt 700 bis Schritt 795), wenn eine Distanzbedingung und eine Bedingung irrtümlichen Betriebs erfüllt sind (Schritt 625: Ja, Schritt 410: Ja, Schritt 415: Ja, Schritt 420: Ja, Schritt 425: Ja, Schritt 630: Ja), wobei die Distanzbedingung eine Bedingung ist, die erfüllt sein soll, wenn eine Distanz zwischen dem Fahrzeug und dem Frontzielobjekt gleich oder kleiner als der Distanzschwellenwert ist, und die Bedingung irrtümlichen Betriebs eine Bedingung ist, die erfüllt sein soll, wenn ein Fahrer irrtümlich ein Beschleunigungsbetriebselement (32a) bedient, das zu bedienen ist, um eine Antriebskraft zu erhöhen, die eine Antriebsquelle (34a) des Fahrzeugs erzeugt.

## Revendications

1. Appareil de soutien à la conduite comprenant :
un élément d'actionnement d'accélération (32a) pouvant être actionné par un conducteur d'un véhicule pour augmenter une force motrice qu'une source motrice (34a) dudit véhicule génère ; et
une unité de commande (20, 30, 40) capable de réaliser une commande de limitation d'accélération (étape 720) pour commander ledit véhicule d'une manière telle qu'une accélération dudit véhicule ne dépasse pas une accélération de limitation prédéterminée (Glmt),
ladite unité de commande étant configurée pour :
établir un seuil de distance à une valeur qui varie en fonction d'un type d'un objet de cible avant qui est présent devant ledit véhicule (étape 620, étape 625, étape 650, étape 660, étape 665) ; et
réaliser ladite commande de limitation d'accélération (étape 635, étape 700 à étape 795) quand une condition de distance et une condition d'actionnement erroné sont satisfaites (étape 625 : Oui, étape 410 : Oui, étape 415 : Oui, étape 420 : Oui, étape 425 : Oui, étape 630 : Oui), ladite condition de distance étant une condition qui doit être satisfaite quand une distance entre ledit véhicule et ledit objet de cible avant est égale ou inférieure audit seuil de distance, et ladite condition d'actionnement erroné étant une condition qui doit être satisfaite quand ledit conducteur actionne de manière erronée ledit élément d'actionnement d'accélération.

2. Appareil de soutien à la conduite selon la revendication 1,
dans lequel, ladite unité de commande est configurée pour établir, quand ledit type dudit objet de cible avant est un véhicule, ledit seuil de distance à une valeur qui est plus petite qu'une valeur dudit seuil de distance qui est établie quand ledit type dudit objet de cible avant est un piéton.

3. Appareil de soutien à la conduite selon la revendication 1,
dans lequel, ladite unité de commande est configurée pour déterminer que ladite condition d'actionnement erroné est satisfaite dans une période depuis un instant où au moins une d'une condition qui doit être satisfaite quand une quantité d'actionnement dudit élément d'actionnement d'accélération est égale ou supérieure à un seuil prédéterminé de quantité d'actionnement et d'une condition qui doit être satisfaite quand un taux de changement de ladite quantité d'actionnement dudit élément d'actionnement d'accélération est égal ou supérieur à un seuil prédéterminé de taux de changement de quantité d'actionnement devient satisfaite (étape 410 : Oui, étape 415 : Oui) jusqu'à un instant où une condition de retour prédéterminé qui doit être satisfaite quand ledit conducteur termine un état dans lequel ledit conducteur actionne de manière erronée ledit élément d'actionnement d'accélération devient satisfaite (étape 510 : Oui).

4. Appareil de soutien à la conduite selon la revendication 1,
dans lequel, ladite unité de commande est configurée pour réaliser ladite commande de limitation d'accélération, quand ladite condition de distance et ladite condition d'actionnement erroné sont satisfaites (étape 625 ; Oui, étape 630 : Oui), dans un cas dans lequel une vitesse de véhicule indicative d'une vitesse dudit véhicule est égale ou inférieure à un seuil prédéterminé de vitesse (étape 611 : Oui).

5. Appareil de soutien à la conduite selon la revendication 1,
dans lequel, ladite unité de commande est configurée pour faire varier ledit seuil de distance d'une manière telle que ledit seuil de distance est plus grand lorsqu'une vitesse relative dudit objet de cible avant par rapport audit véhicule est plus élevée.

6. Appareil de soutien à la conduite selon la revendication 1,
dans lequel, ladite unité de commande est configurée pour :
quand il y a une pluralité desdits objets de cible avant, établir de manière séquentielle ledit seuil de distance à ladite valeur déterminée sur la base dudit type dudit objet de cible avant qui est choisi parmi lesdits objets de cible avant dans un ordre croissant par rapport à ladite distance jusqu'audit véhicule, et déterminer si ladite distance dudit objet de cible qui est choisi dans ledit ordre croissant est égale ou inférieure audit seuil de distance établi ou non (étape 613, étape 615 à étape 625, étape 645 à étape 665, étape 670, étape 675) ; et
déterminer que ladite condition de distance est satisfaite quand il y a un objet de cible avant quelconque dont une distance est égale ou inférieure audit seuil de distance établi (étape 625 : Oui).

7. Procédé de soutien à la conduite destiné à réaliser une commande de limitation d'accélération (étape 720) pour limiter une accélération d'un véhicule d'une manière telle que ladite accélération dudit véhicule ne dépasse pas une accélération de limitation prédéterminée comprenant :
une première étape d'établissement d'un seuil de distance à une valeur qui varie en fonction d'un type d'objet de cible avant qui est présent devant ledit véhicule (étape 620, étape 625, étape 650, étape 660, étape 665) ; et
une deuxième étape de réalisation de ladite commande de limitation d'accélération (étape 635, étape 700 à étape 795) quand une condition de distance et une condition d'actionnement erroné sont satisfaites (étape 625 : Oui, étape 410 : Oui, étape 415 : Oui, étape 420 : Oui, étape 425 : Oui, étape 630 : Oui), ladite condition de distance étant une condition qui doit être satisfaite quand une distance entre ledit véhicule et ledit objet de cible avant est égale ou inférieure audit seuil de distance, et ladite condition d'actionnement erroné étant une condition qui doit être satisfaite quand un conducteur dudit véhicule actionne de manière erronée un élément d'actionnement d'accélération (32a) qui doit être actionné afin d'augmenter une force motrice qu'une source motrice (34a) dudit véhicule génère.

8. Dispositif de stockage de programme, lisible par une machine, qui stocke un programme destiné à réaliser une commande de limitation d'accélération (étape 720) pour limiter une accélération d'un véhicule d'une manière telle que ladite accélération dudit véhicule ne dépasse pas une accélération de limitation prédéterminée,
ledit programme amenant un calculateur (20, 30, 40) à mettre en œuvre des processus de :
une première étape d'établissement d'un seuil de distance à une valeur qui varie en fonction d'un type d'objet de cible avant qui est présent devant ledit véhicule (étape 620, étape 625, étape 650, étape 660, étape 665) ; et
une deuxième étape de réalisation de ladite commande de limitation d'accélération (étape 635, étape 700 à étape 795) quand une condition de distance et une condition d'actionnement erroné sont satisfaites (étape 625 : Oui, étape 410 : Oui, étape 415 : Oui, étape 420 : Oui, étape 425 : Oui, étape 630 : Oui), ladite condition de distance étant une condition qui doit être satisfaite quand une distance entre ledit véhicule et ledit objet de cible avant est égale ou inférieure audit seuil de distance, et ladite condition d'actionnement erroné étant une condition qui doit être satisfaite quand un conducteur dudit véhicule actionne de manière erronée un élément d'actionnement d'accélération (32a) qui doit être actionné afin d'augmenter une force motrice qu'une source motrice (34a) dudit véhicule génère.
